# EUROPÄISCHE PATENTSCHRIFT

(11) **EP 1 887 190 B1**
(45) Veröffentlichungstag und Bekanntmachung des Hinweises auf die Patenterteilung: **11.09.2013**
(21) Anmeldenummer: 07014729.3
(22) Anmeldetag: 26.07.2007
(51) Int. Cl.: F01D 25/22

(54) **Lagerung einer Turbomaschine**
Bearing of a turbomachine
Palier d'une turbomachine

(30) Priorität: 12.08.2006 DE 102006037821
(43) Veröffentlichungstag der Anmeldung: 13.02.2008
(73) Patentinhaber: ATLAS COPCO ENERGAS GMBH, 50999 Köln (DE)
(72) Erfinder: SANDSTEDE, Heiko, 50999 Köln (DE); BOSEN, Werner, 51143 Köln (DE)
(74) Vertreter: Albrecht, Rainer Harald

(56) Entgegenhaltungen:
- EP-A1- 0 302 317
- CH-A- 386 785
- DE-A1- 3 503 695
- DE-T2- 68 905 660
- US-A- 3 674 355
- US-A- 3 740 163

## Beschreibung

Die Erfindung betrifft eine Turbomaschine mit einer in einem Wellengehäuse gelagerten Welle und zumindest einem in einem Laufradgehäuse an einem Ende der Welle fliegend angeordneten Laufrad zur Kompression, Expansion oder Förderung eines Arbeitsgases, wobei die Welle mit zumindest zwei Lagern in dem Wellengehäuse gelagert ist, wobei die Lager einen Anschluss an eine Druckgasleitung aufweisen, die mit einem Druckbereich der Turbomaschine verbunden ist, wobei die Lager mit einem von dem Druckbereich durch die Druckgasleitung geführten Anteil des Arbeitsgases beaufschlagt sind und wobei das Wellengehäuse einen Entlüftungsanschluss aufweist. Die Turbomaschine kann beispielsweise als Kompressor, Expander oder auch als kombinierte Expander/Kompressor-Anordnung für verschiedene Gasprozesse wie die Gasaufbereitung, Gasreinigung, Energiegewinnung und insbesondere die kryogene Luftzerlegung eingesetzt werden.

Ein Turboverdichter für Hochtemperaturanwendungen mit den eingangs beschriebenen Merkmalen ist aus der Druckschrift US 4 786 238 bekannt, wobei die Welle axial und radial durch hydrodynamische, gasgeschmierte Lager in dem Wellengehäuse gelagert ist. Die Lagerung wird dadurch erreicht, dass zwischen einander zugeordneten Lagerflächen von Wellengehäuse und Welle Lagerspalten verbleiben, die typischerweise wenige Mikrometer breit sind. Die hydrodynamischen Lager, die bei einer Schmierung mit Luft auch als aerodynamische Lager bezeichnet werden, nutzen den Effekt der Selbstschmierung, wobei sich bei einer ausreichend hohen Relativgeschwindigkeit zwischen den einander zugeordneten Lagerflächen hydrodynamisch ein Gleitfilm ausbildet. Um einen möglichst geringen Lagerspalt zu realisieren, weisen die in der US 4 786 238 beschriebenen hydrodynamischen Lager nachgiebige bzw. sich anschmiegende Lagerschalenstrukturen auf, die sich unter dem wirkenden Schmierfilmdruck verformen und selbständig anpassen. Zur Kühlung der Lager können diese mit einem geringen Gasfluss beaufschlagt werden. Diese Gasaustausch führt jedoch nicht zu einer Änderung der Lagereigenschaften. Da die Schmierwirkung erst bei einer hohen Drehzahl einsetzt, ist bei der beschriebenen Ausgestaltung eine Gleitbeschichtung der einander zugeordneten Lagerflächen vorgesehen, die bei einem Anlaufen der Turbomaschine die Reibung der abschnittsweise im Reibkontakt stehenden Lagerflächen reduziert. Hydrodynamische Lager sind empfindlich gegen Druckstoßbelastungen, die beispielsweise bei Störfällen oder bei Lastwechseln nicht zu vermeiden sind. Aufgrund des geringen Lagerspaltes kann es bei hohen Drehzahlen zu einem direkten Materialkontakt der einander zugeordneten Lagerflächen kommen, wodurch die empfindlichen Lagerflächen zerstört werden können und ein Austausch des Lagers erforderlich wird.

Aus der Druckschrift DE 87 17 441 U1 ist ein Turbolader einer Verbrennungskraftmaschine mit einem gasstatischen und -dynamischen Lager bekannt. Bei einem solchen Turbolader für Verbrennungskraftmaschinen, mit denen üblicherweise eine Druckerhöhung von etwa 1 bar erreicht wird, soll das Laufverhalten verbessert werden. Dazu ist ein gasstatisches und -dynamisches Radiallager vorgesehen, welches als Lagerflächen überlappend angeordnete, gespreizte Federelemente aufweist. Aufgrund der geringen von dem Turbolader erzeugten Druckdifferenz und der von den Federelementen gebildeten Lagerflächen, die sich elastisch an den Rotor anschmiegen können, erfolgt die radiale Lagerung der Welle bei hohen Drehzahlen praktisch ausschließlich hydrodynamisch. Die als Turbolader für Verbrennungsmaschinen vorgesehene Anordnung ist deshalb empfindlich gegen Druckstoßbelastungen.

Aus US 3,674,355 ist eine Turbomaschine mit den eingangs beschriebenen Merkmalen bekannt, deren Lager als hydrostatische, gasgeschmierte Lager ausgebildet sind und die Welle axial und radial lagern.

Die DE 689 05 660 T2 offenbart eine Lagervorrichtung in einem Gehäuse mit hydrostatischen Gaslagern zur radialen und axialen Abstützung eines Rotors. Die Gaslager weisen Taschen auf, welche zugeordneten Flächen des Rotors gegenüberstehen. In die Taschen wird ein Arbeitsgas, das auch dem als Expansionsturbine ausgeführten Rotor zugeleitet wird, durch Düsen einge-blasen. Das Arbeitsgas verlässt den Bereich der Gaslager durch ein Dichtungssystem, welches zwischen Rotor und dem nicht drehbeweglichen Gehäuse angeordnet ist. Der Druckabfall über dem Gaslager wird beispielhaft mit 4,5 MPa (45 bar) angegeben.

Der Erfindung liegt die Aufgabe zugrunde, eine Turbomaschine mit den eingangs beschriebenen Merkmalen anzugeben, bei der die Welle robust, wartungsarm und auf einfache Weise in dem Wellengehäuse gelagert und unempfindlich gegenüber Druckstößen ist, wobei die Lagereigenschaften auch abhängig von der Belastung geregelt werden können.

Gegenstand der Erfindung und Lösung dieser Aufgabe ist eine Turbomaschine nach Anspruch 1.

Erfindungsgemäß sind die Lager für die axiale und radiale Lagerung der Welle als hydrostatische, gasgeschmierte Lager ausgebildet sind, wobei die Welle durch die hydrostatischen gasgeschmierten Lager derart gelagert ist, dass die Lagerwirkung unabhängig oder zumindest weitgehend unabhängig von der Rotationsgeschwindigkeit der Welle ist, wodurch auch während des Anlaufens der Turbomaschine eine ausreichende Abstützung der Welle und drehzahlunabhängig eine große Steifigkeit und geringe Anfälligkeit gegen Druckstoßbelastungen gewährleistet ist. Der Druck in dem Anschluss an die Druckgasleitung ist um 10 bar bis 30 bar größer als der Druck in dem Bereich des Entlüftungsanschlusses. Da das Lager mit einem Anteil des Arbeitsgases beaufschlagt ist, ist erfindungsgemäß eine separate Druckgasquelle nicht vorgesehen. Im Vergleich mit einem hydrodynamischen, gasgeschmierten Lager zeichnet sich das hydrostatische Lager durch eine große Steifigkeit und eine geringere Anfälligkeit gegen Druckstoßbelastungen aus. Grundsätzlich können die hydrostatischen Lager abhängig von der konstruktiven Ausgestaltung bei hohen Drehzahlen einen gewissen dynamischen Anteil aufweisen. Da bei den hydrostatischen Lagern aber die Ausbildung eines Gaspolsters und eines vergleichsweise großen Lagerspaltes vorgesehen sind, ist der dynamische Anteil der Tragkraft auch bei der Maximaldrehzahl typischerweise geringer als 20 %, vorzugsweise geringer als 10 %. Der dynamische Anteil der Tragkraft kann dabei durch einen Vergleich der an einem Lager insgesamt im ruhenden Zustand und bei maximaler Drehzahl wirkenden Kräfte ermittelt werden. Während bei hydrodynamischen Lagern vorzugsweise elastische Feder-, Blech- oder Folienelemente verwendet werden, die sich zur Bildung eines möglichst geringen Lagerspaltes von typischerweise wenigen µm an den Rotor anschmiegen können, ist im Rahmen der Erfindung vorgesehen, dass die Lagerflächen aus einem starren Material gebildet sind. Es sind keine weiteren Lager vorgesehen, sodass die gesamte Welle vollständig hydrostatisch gelagert ist. Die Erfindung beruht auf der Erkenntnis, dass durch eine ausschließliche oder nahezu ausschließliche hydrostatische Lagerung sowohl die Lagereigenschaften bei geringen als auch bei hohen Drehzahlen verbessert werden können. Um dies zu erreichen muss zwischen dem Anschluss an die Druckgasleitung und dem Bereich des Entlüftungsanschlusses erfindungsgemäß eine Druckdifferenz zwischen 10 bar und 30 bar vorliegen. Die konstruktiv besonders einfache, zuverlässige und robuste Lageranordnung ist insbesondere für kryogene Anwendungen geeignet. Dazu zählen ohne Einschränkung die kryogene Zerlegung von Luft und die Verflüssigung ihrer Komponenten sowie die Verflüssigung und Rückverflüssigung von Kohlenwasserstoffgasen, beispielsweise Erdgas.

Aufgrund der einfachen, robusten Ausgestaltung des Lagers ist die Gefahr eines Lagerschadens minimiert. Die erfindungsgemäße Ausgestaltung ist im besonderen Maße für einfach aufgebaute Turbomaschinen oder für öllose Turbomaschinen geeignet, bei denen eine flüssigkeitsgeschmierte Lagerung nicht in Betracht zu ziehen ist.

Erfindungsgemäß weist die Druckgasleitung einen Druck- oder Mengenflussregler auf. Durch einen solchen Regler werden Druckschwankungen in dem Druckbereich der Turbomaschine, mit dem die Druckgasleitung verbunden ist, kompensiert und/oder die Lagereigenschaften abhängig von der Belastung geregelt. Insbesondere können mit dem Druckregler oder dem Mengenflussregler die Steifigkeit und das Dämpfungsverhalten des Lagers gemäß den Erfordernissen auf einen optimalen Wert eingestellt werden. Der Druck- bzw. Mengenflussregler ist elektronisch steuerbar und an eine zugeordnete Steuereinrichtung angeschlossen, die während des Betriebes ausgehend von Messsignalen und/oder Steuersignalen eine flexible Anpassung des Drucks bzw. des Mengenflusses ermöglicht.

Im Rahmen der Erfindung kann in einer besonders einfachen Ausgestaltung vorgesehen sein, dass der durch die Druckgasleitung geführte Anteil des Arbeitsgases nach dem Durchströmen der Lager durch den Entlüftungsanschluss aus der Turbomaschine herausgeführt wird. Eine solche Ausgestaltung kann insbesondere dann vorteilhaft sein, wenn nur ein geringer Anteil des Arbeitsgases für die Schmierung des Lagers erforderlich ist. Vorzugsweise ist jedoch vorgesehen, dass der Entlüftungsanschluss mit einem Niederdruckbereich der Turbomaschine verbunden ist und so der für die Schmierung des Lagers genutzte Anteil des Arbeitsgases in der Turbomaschine verbleibt. Im Rahmen dieser Ausgestaltung ist es insbesondere möglich, die Turbomaschine zumindest weitgehend hermetisch abgeschlossen zu bauen, wobei keine oder nur einfache Dichtungen erforderlich sind. Bei einer solchen Ausgestaltung kann insbesondere bei giftigen, brennbaren oder explosiven Arbeitsgasen die Betriebssicherheit stark erhöht und eine Umweltkontamination durch eine Gasleckage sicher vermieden werden.

Im Rahmen einer vorteilhaften Ausgestaltung der Erfindung ist vorgesehen, dass an beiden Enden der Welle jeweils ein Laufrad angeordnet ist, wobei ein Laufrad einer Verdichterstufe und das andere Laufrad einer Expansionsstufe der Turbomaschine zugeordnet ist. Die Druckgasleitung kann dabei mit dem Hochdruckbereich im Vorlauf der Expansionsstufe und der Entlüftungsanschluss mit dem Niederdruckbereich im Vorlauf der Verdichterstufe verbunden sein. Grundsätzlich kann bei einer solchen Ausführung jedoch auch die Druckgasleitung mit dem Hochdruckbereich des Verdichters und der Entlüftungsanschluss mit dem Auslass der Turbine oder einem Entlüftungsauslass verbunden sein.

Der Aufbau eines tragfähigen Luftpolsters kann über eine Drosselung am Austritt des Lagerspaltes und/oder über Drosselstellen am Eintritt des Gases zum Lagerspalt erfolgen. Die Lager weisen an den Lagerflächen Taschen auf, die von dem Anschluss an die Druckgasleitung mit dem Anteil des Arbeitsgases beaufschlagt sind. Die Taschen sind dabei derart ausgebildet, dass sie ausgehend von den angrenzenden Innenflächen des Gehäuses zurückspringen. Um den Umfang können bei den Lagern radial umlaufende, ringförmige oder mehrere voneinander getrennte Taschen vorgesehen sein. Das Arbeitsgas wird dabei erfindungsgemäß über Einlassdüsen in die Taschen geleitet, in denen sich ein Luftpolster bzw. ein Kissen ausbildet, auf dem die Welle der Turbomaschine abgestützt ist. Innerhalb der Taschen ist der Druck vorzugsweise konstant oder zumindest im Wesentlichen konstant. Darüber hinaus können auch Lagerelemente vorgesehen sein, die flächig verteilte Mikrodüsen aufweisen. Um eine sichere Lagerung der Welle zu gewährleisten, muss ein ausreichend großer Überdruck auf die hydrostatischen Lager wirken. Abhängig von der genauen Ausgestaltung der Lager kann der Druckabfall über jedes der Lager zwischen 10 bar und 30 bar liegen. Entsprechend ist auch der Druck in dem Anschluss an die Druckgasleitung um 10 bar bis 30 bar größer als der Druck im Bereich des Entlüftungsanschlusses.

Um die Lager vor einer Verschmutzung und damit vor einem möglicherweise erhöhten Verschleiß zu schützen, ist in der Druckgasleitung vorzugsweise ein Filter angeordnet. Die an die Druckgasleitung angeschlossenen Lagerflächen sind bevorzugt in dem Wellengehäuse gebildet, wodurch eine besonders einfache Konstruktion erreicht wird.

Die Erfindung wird im Folgenden anhand einer lediglich ein Ausführungsbeispiel darstellenden Zeichnung erläutert. Es zeigen schematisch:
- Fig. 1: eine erfindungsgemäße Turbomaschine,
- Fig. 2: die Detailansicht eines als Axial-/Radiallager ausgeführten hydrostatischen, gasgeschmierten Lagers.

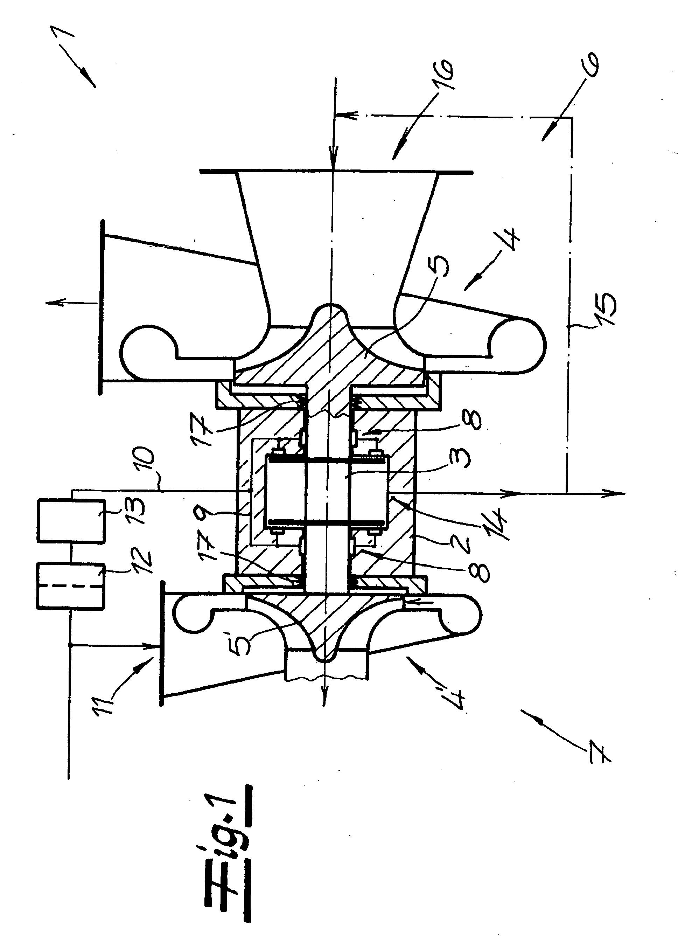

Fig. 1 zeigt eine Turbomaschine 1 mit einer in einem Wellengehäuse 2 angeordneten Welle 3 und an den beiden Enden der Welle fliegend angeordneten Laufrädern 5, 5' in jeweils einem Laufradgehäuse 4, 4'. Das eine Laufrad 5 ist einer Verdichterstufe 6 und das andere Laufrad 5' einer Expansionsstufe 7 der Turbomaschine 1 zugeordnet. Die Welle 3 ist durch hydrostatische, gasgeschmierte Lager 8 in dem Wellengehäuse 2 gelagert, wobei die Lager 8 einen Anschluss 9 an eine Druckgasleitung 10 aufweisen. Das andere Ende der Druckgasleitung 10 ist mit dem Hochdruckbereich 11 im Vorlauf der Expansionsstufe 7 verbunden. Ein Anteil des Arbeitsgases wird von dem Hochdruckbereich 11 im Vorlauf der Expansionsstufe 7 durch die Druckgasleitung 10 zu den Lagern 8 geführt. Um eine Verschmutzung der Lager 8 zu vermeiden und eine Regelung der Lagereigenschaften zu ermöglichen, durchströmt der Anteil des Arbeitsgases dabei ein Filter 12 und einen Druckregler oder einen Mengenflussregler 13. Nach dem Durchströmen der Lager 8 wird der Anteil des Arbeitsgases von einem Entlüftungsanschluss 14 des Wellengehäuses 2 über eine Verbindungsleitung 15 zu dem Niederdruckbereich 16 im Vorlauf der Verdichterstufe 6 geführt. Zwischen den Laufrädern 5, 5' und den jeweils zugeordneten Lagern 8 ist jeweils eine Wellendichtungsanordnung 17 vorgesehen.

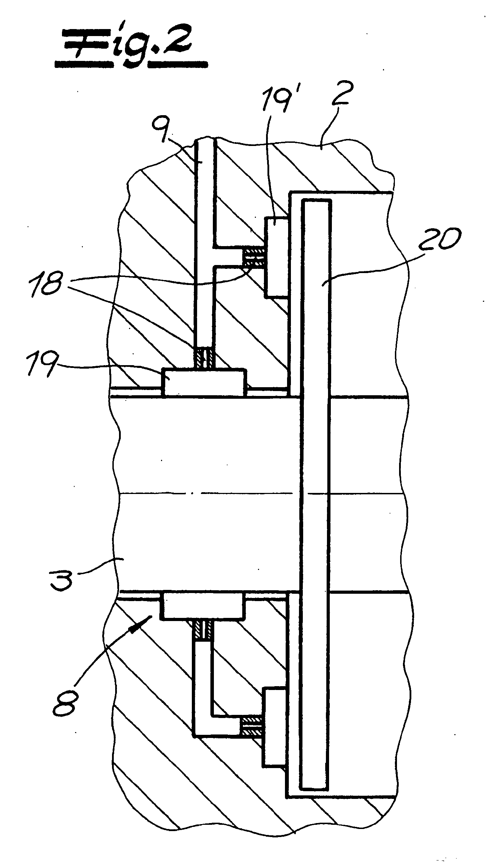

Fig. 2 zeigt eines der als Axial-/Radiallager ausgeführten Lager 8 gemäß Fig. 1 in einer Detailansicht. Das aus dem Druckbereich der Turbomaschine 1 entnommene Arbeitsgas wird über einen verzweigten Anschluss 9 von der Druckgasleitung 10 zu den Lagern 8 geleitet und durch Düsen 18 in Taschen 19, 19' für die radiale Lagerung und die axiale Lagerung eingeblasen, wobei die Taschen 19 für die radiale Lagerung unmittelbar mit einer zugeordneten Fläche der Welle 3 und die Taschen 19' für die axiale Lagerung mit einer zugeordneten auf der Welle 3 angeordneten Lagerscheibe 20 zusammenwirken. In den Taschen 19, 19' bildet das eingeblasene Arbeitsgas Kissen auf denen die Welle 3 der Turbomaschine 1 abgestützt ist. Um eine zuverlässige Lagerung zu gewährleisten ist erfindungsgemäß der Druck in dem Bereich des Anschlusses 9 an die Druckgasleitung 10 um 10 bar bis 30 bar größer als der Druck im Bereich des Entlüftungsanschlusses 14, wobei der Druckabfall im Wesentlichen über die Lager 8 erfolgt.

## Patentansprüche

1. Turbomaschine (1) mit einer in einem Wellengehäuse (2) gelagerten Welle (3) und zumindest einem in einem Laufradgehäuse (4, 4') an einem Ende der Welle (3) fliegend angeordneten Laufrad (5, 5') zur Kompression, Expansion oder Förderung eines Arbeitsgases, wobei die Welle (3) mit zumindest zwei Lagern (8) in dem Wellengehäuse (2) gelagert ist, wobei die Lager (8) einen Anschluss (9) an eine Druckgasleitung (10) aufweisen, die mit einem Druckbereich der Turbomaschine (1) verbunden ist, wobei die Lager (8) mit einem von dem Druckbereich durch die Druckgasleitung (10) geführten Anteil des Arbeitsgases beaufschlagt sind, wobei das Wellengehäuse (2) einen Entlüftungsanschluss (14) aufweist, wobei die Lager (8) als hydrostatische, gasgeschmierte Lager (8) ausgebildet sind und die Welle (3) axial und radial lagern,
wobei die Lager (8) als kombinierte Axial-/Radiallager ausgebildet sind, die Taschen (19) für die radiale Lagerung und Taschen (19') für die axiale Lagerung aufweisen, wobei die Taschen (19) für die radiale Lagerung unmittelbar mit einer zugeordneten Fläche der Welle (3) und die Taschen (19') für die axiale Lagerung mit einer auf der Welle (3) angeordneten zugeordneten Lagerscheibe (20) zusammenwirken,
wobei das Arbeitsgas durch Düsen (18) in die Taschen (19, 19') einblasbar ist, und
wobei das in die Taschen (19, 19') eingeblasene Arbeitsgas in den Taschen (19, 19') Kissen bildet, auf denen die Welle (3) abgestützt ist, und die Lagerwirkung weitgehend unabhängig von der Rotationsgeschwindigkeit der Welle (3) ist,
**dadurch gekennzeichnet, dass** der Druck im Bereich des Anschlusses (9) an die Druckgasleitung (10) um 10 bar bis 30 bar größer ist als der Druck im Bereich des Entlüftungsanschlusses (14) und dass die Druckgasleitung (10) einen Druck- oder einen Mengenflussregler (13) aufweist, wobei der Druck- oder Mengenflussregler (13) elektronisch steuerbar ist und an eine zugeordnete Steuereinrichtung angeschlossen ist, die während des Betriebes ausgehend von Messsignalen oder Steuersignalen eine flexible Anpassung des Drucks oder Mengenflusses ermöglicht.

2. Turbomaschine (1) nach Anspruch 1, **dadurch gekennzeichnet, dass** der Entlüftungsanschluss (14) mit einem Niederdruckbereich (16) der Turbomaschine (1) verbunden ist.

3. Turbomaschine (1) nach Anspruch 1 oder 2, **dadurch gekennzeichnet, dass** an beiden Enden der Welle (3) jeweils ein Laufrad (5, 5') angeordnet ist, wobei ein Laufrad (5) einer Verdichterstufe (6) und das andere Laufrad (5') einer Expansionsstufe (7) der Turbomaschine (1) zugeordnet ist.

4. Turbomaschine (1) nach Anspruch 3, **dadurch gekennzeichnet, dass** die Druckgasleitung (10) mit dem Hochdruckbereich (11) im Vorlauf der Expansionsstufe (7) und der Entlüftungsanschluss (14) mit dem Niederdruckbereich (16) im Vorlauf der Verdichterstufe (6) verbunden ist.

5. Turbomaschine (1) nach einem der Ansprüche 1 bis 4, **dadurch gekennzeichnet, dass** in der Druckgasleitung (10) ein Filter (12) angeordnet ist.

## Claims

1. A turbomachine (1) comprising a shaft (3) mounted in a shaft housing (2), and at least one rotor (5, 5') that is arranged in a rotor housing (4, 4') and is overhung at one end of the shaft (3) for compression, expansion or transport of a working gas, wherein the shaft (3) is mounted in the shaft housing (2) by means of at least two bearings (8), wherein the bearings (8) have a connection (9) to a compressed gas line (10) that is connected to a pressure region of the turbomachine (1), wherein the bearings (8) are acted on by a portion of the working gas that is fed from the pressure region through the compressed gas line (10), wherein the shaft housing (2) has a venting connection (14), wherein the bearings (8) are designed as hydrostatic, gas-lubricated bearings (8) and mount the shaft (3) axially and radially,
wherein the bearings (8) are designed as combined axial/radial bearings that have pockets (19) for radial mounting and pockets (19') for axial mounting, wherein the pockets (19) for radial mounting interact directly with an associated surface of the shaft (3), and the pockets (19') for axial mounting interact with an associated bearing washer (20) arranged on the shaft (3),
wherein the working gas can be blown into the pockets (19, 19') by means of nozzles (18), and
wherein the working gas blown into the pockets (19, 19') forms cushions on which the shaft (3) is supported, and the mounting effect is largely independent of the rotation speed of the shaft (3),
**characterized in that** the pressure in the region of the connection (9) to the compressed gas line (10) is 10 bar to 30 bar higher than the pressure in the region of the venting connection (14), and that the compressed gas line (10) has a pressure regulator or volume flow regulator (13), wherein the pressure regulator or volume flow regulator (13) can be controlled electronically and is connected to an associated control unit which, based on measuring signals or control signals, enables during the operation a flexible adjustment of the pressure or the volume flow.

2. The turbomachine (1) according to claim 1, **characterized in that** the venting connection (14) is connected to a low pressure region (16) of the turbomachine (1).

3. The turbomachine (1) according to claim 1 or claim 2, **characterized in that** on both ends of the shaft (3) in each case one rotor (5, 5') is arranged, wherein one rotor (5) is associated with a compression stage (6) and the other rotor (5') is associated with an expansion stage (7) of the turbomachine (1).

4. The turbomachine (1) according to claim 3, **characterized in that** the compressed gas line (10) is connected to the high pressure region (11) in the flow of the expansion stage (7), and the venting connection (14) is connected to the low pressure region (16) in the flow of the compression stage (6).

5. The turbomachine (1) according to any one of the claims 1 to 4, **characterized in that** a filter (12) is arranged in the compressed gas line (10).

## Revendications

1. Turbomachine (1) avec un arbre (3) monté dans un carter d'arbre (2) et au moins une roue (5, 5') disposée mobile sur une extrémité de l'arbre (3) dans un carter de roue (4, 4') pour compression, expansion ou transport d'un gaz fonctionnel, pour laquelle l'arbre (3) est monté avec au moins deux paliers (8) dans le carter d'arbre (2), les paliers (8) présentant un raccord (9) à une conduite de gaz sous pression (10), qui est reliée à une zone de pression de la turbomachine (1), pour laquelle les paliers (8) sont sollicités par une partie du gaz fonctionnel guidée de la zone sous pression par la conduite de gaz sous pression (10), le carter d'arbre (2) présentant un raccord de purge (14), pour laquelle les paliers (8) sont constitués comme paliers hydrostatiques, lubrifiés au gaz et logeant l'arbre (3) de façon axiale et radiale,
pour laquelle les paliers (8) sont constitués comme paliers combinés axiaux/radiaux, présentent les poches (19) pour le logement radial et les poches (19') pour le logement axial, les poches (19) pour le logement radial coopérant directement avec une surface attribuée de l'arbre (3) et les poches (19') pour le logement axial avec une rondelle-palier (20) attribuée disposée sur l'arbre (3),
pour laquelle le gaz fonctionnel peut être insufflé dans les poches (19, 19') par des buses (18), et
pour laquelle le gaz fonctionnel insufflé dans les poches (19, 19') forme des coussins sur lesquels est supporté l'arbre (3) et l'action des paliers est largement indépendante de la vitesse de rotation de l'arbre (3),
**caractérisé en ce que** la pression dans la zone du raccord (9) à la conduite de gaz sous pression (10) est de 10 bars à 30 bars supérieure à la pression dans la zone du raccord de purge (14) et **en ce que** la conduite de gaz sous pression (10) comporte un régulateur de pression ou de débit (13), le régulateur de pression ou de débit (13) étant pilotable par système électronique et étant raccordé à un système de commande affecté qui permet une adaptation souple de la pression ou du débit à partir de signaux de mesure ou de signaux de commande.

2. Turbomachine (1) selon la revendication 1 **caractérisé en ce que** le raccord de purge (14) est relié à une zone de basse pression (16) de la turbomachine (1).

3. Turbomachine (1) selon la revendication 1 ou 2 **caractérisé en ce qu'**aux deux extrémités de l'arbre (3) est à chaque fois disposée une roue (5, 5'), une roue (5) étant attribuée à un étage de compression (6) et l'autre roue (5') à un étage d'expansion (7) de la turbomachine.

4. Turbomachine (1) selon la revendication 3 **caractérisé en ce que** la conduite de gaz sous pression (10) est reliée à la zone de haute pression (11) en avant de l'étage d'expansion (7) et le raccord de purge (14) à la zone de basse pression (16) en avant de l'étage de compression (6).

5. Turbomachine (1) selon une quelconque des revendications 1 à 4 **caractérisé en ce qu'**un filtre (12) est disposé dans la conduite de gaz sous pression (10).
